Europäisches Patentamt

European Patent Office

Office européen des brevets

(19)

(11) Veröffentlichungsnummer: **0 242 659 B1**

(12) # EUROPÄISCHE PATENTSCHRIFT

(45) Veröffentlichungstag der Patentschrift:
18.09.91 Patentblatt 91/38

(51) Int. Cl.⁵: **F16C 13/02**

(21) Anmeldenummer: **87104918.5**

(22) Anmeldetag: **02.04.87**

(54) **Deformationsregelwalze.**

(30) Priorität: **09.04.86 DE 3611859**
**23.12.86 DE 3644170**

(43) Veröffentlichungstag der Anmeldung:
**28.10.87 Patentblatt 87/44**

(45) Bekanntmachung des Hinweises auf die
Patenterteilung:
**18.09.91 Patentblatt 91/38**

(84) Benannte Vertragsstaaten:
**BE CH DE FR GB IT LI NL SE**

(56) Entgegenhaltungen:
DE-A- 3 138 365
DE-A- 3 325 385
DE-A- 3 416 210
FR-A- 2 226 508

(56) Entgegenhaltungen:
FR-A- 2 339 094
FR-A- 2 441 087
GB-A- 2 158 196
US-A- 4 058 877

(73) Patentinhaber: **Kleinewefers GmbH**
**Kleinewefersstrasse 25**
**W-4150 Krefeld 1 (DE)**

(72) Erfinder: **Pav, Josef, Dr.**
**Eichhornweg 36c**
**W-4150 Krefeld (DE)**
Erfinder: **Wenzel, Reinhard**
**Glindholzstrasse 19**
**W-4150 Krefeld (DE)**

(74) Vertreter: **Knoblauch, Ulrich, Dr.-Ing.**
**Kühhornshofweg 10**
**W-6000 Frankfurt am Main 1 (DE)**

## Beschreibung

Die Erfindung bezieht sich auf eine Deformationsregelwalze für ein Walzensystem mit mindestens zwei einen Walzenspalt zwischen sich bildenden Walzen, bei der eine Walzenschale mit Hilfe von hydrostatischen Lagerelementen, die durch Druckgeber belastet sind, auf einem die Walzenschale durchsetzenden, drehfest gehaltenen Träger abgestützt und radial relativ zum Träger verstellbar ist, wobei zumindest auf der Walzenspalt-Seite vorgesehene Lagerelemente (Primär-Lagerelemente) zonenweise unterschiedlich mit Druck versorgbar sind, wobei die Enden der Walzenschale je auf einem Lagerring gelagert sind, der radial zum Träger verstellbar ist, und wobei mindestens eine Kammer mit bei der Verstellung veränderlichem Volumen vorgesehen ist, die durch eine zylindrische Radialbohrung im Träger und einen auf den Lagerring wirkenden Radialkolben begrenzt wird.

Bei einer bekannten Deformationsregelwalze dieser Art (DE-A-31 38 365) liegen die Radialkolben kraftschlüssig am Lagerring an und sind durch Druckflüssigkeit derart belastet, daß sie zur Aufnahme des Eigengewichts des Walzenmantels und eventueller zusammen mit dem Mantel beweglicher Walzen- bzw. Pressenteile geeignet sind. Bei der Regelung der Preßkräfte braucht daher das Eigengewicht der Walzenmäntel und der beweglichen Teile nicht mehr berücksichtigt zu werden. Die über die Radialkolben wirkenden Kräfte sind also auf einen bestimmten Wert, der der Gewichtskraft entspricht, festgelegt. Damit ist auch die betriebliche Position des Lagerrings vorgegeben. Es gibt nur eine Position, die auch noch durch einen Regelkreis überwacht werden kann.

Bei einer weiteren bekannten Deformationsregelwalze (DE-OS 33 25 385) ist die Walzenschale ausschließlich auf den Primär- und Sekundär-Lagerelementen abgestützt. Die mit den Lagerringen versehenen Enden der Walzenschale sind radial frei bewegbar. Die Lagerringe sind drehfest gehalten und dienen der Abdichtung gegenüber einem trägerfesten Deckring. Durch entsprechende Wahl der Druckbeaufschlagung der einzelnen Lagerelemente kann man eine gewünschte Größe und Verteilung der Streckenlast und eine den Walzenspalt bestimmende Form der Walzenschale erreichen. Hierbei nimmt die Walzenschale einen Gleichgewichtszustand ein, bei dem die Streckenlast und die von den Sekundär-Lagerelementen ausgeübten Lagerkräfte gleich den von den Primär-Lagerelementen ausgeübten Kräften sind.

Es sind ferner Deformationsregelwalzen bekannt (DE-OS 34 16 210), bei denen der Lagerring trägerfest gehalten ist. Dies hat den Vorteil, daß die Lage der Walzenenden durch den Träger genau vorgegeben ist und die Walzenschale einen räumlich festliegenden Bezugskörper für die Gegenwalze bzw. die übrigen Walzen des Walzensystems bilden kann. Allerdings kollidiert die trägerfeste Lagerung mit dem Wunsch, mit Hilfe der Lagerelemente eine bestimmte Streckenlastverteilung und eine bestimmte Form des Walzenspalts zu erzielen. Denn im Bereich der Lagerringe ist die Walzenschale festgelegt.

Der Erfindung liegt die Aufgabe zugrunde, eine Deformationsregelwalze der eingangs beschriebenen Art, also mit radial verstellbaren Lagerringen, anzugeben, die bessere Einstellmöglichkeiten bietet und insbesondere unter sonst gleichen Umständen mit einem geringeren Temperaturniveau betrieben werden kann.

Diese Aufgabe wird erfindungsgemäß dadurch gelöst, daß die Kammer Teil einer Blockiervorrichtung ist, mit der der Lagerring zur Beeinflussung der Größe und Verteilung der Streckenlast sowie der Form der Walzenschale und damit des Walzenspalts in beliebig wählbaren Zwischenpositionen des Verstellweges arretierbar ist, und daß der Radialkolben am Lagerring angebracht ist.

Läßt man diese Deformationsregelwalze mit einer im Betrieb ortsfest gelagerten Gegenwalze zusammenwirken, so zeigt sich, daß durch Wahl der Arretierungsposition der Lagerringe in erheblichem Umfang Einfluß auf die Größe und Verteilung der Streckenlast sowie auf die Form der Walzenschale und damit des Walzenspalts genommen werden kann. Die über die Blockiervorrichtung abgeleiteten Kräfte wirken mit einem verhältnismäßig großen axialen Hebelarm auf die Walzenschale, so daß eine ideale Verformbarkeit und damit Anpaßbarkeit der Walzenschale erreicht wird. Auf jeden Fall sind die über die Lagerelemente auf die Walzenschale zu übertragenden Kräfte erheblich geringer als bei frei beweglichen Lagerringen. Daher ist auch die Reibung zwischen Lagerelementen und Walzenschale sowie die damit verbundene Erwärmung kleiner. Verringerte Reibung bedeutet auch, daß die Antriebsleistung herabgesetzt werden kann. Aufgrund von Versuchen oder von Berechnungen kann man die Arretierungsposition so wählen, daß die Summe der von den Lagerelementen übertragenen Kräfte ein Minimum ist.

Die geringere Erwärmung erlaubt es, das Temperaturniveau insgesamt und/oder an bestimmten Stellen zu senken. Die Walzenschale kann daher insbesondere mit einem elastischen Bezug, beispielsweise aus Papier oder Kunststoff, versehen sein, der einerseits eine Wärmeisolation der Walzenschale darstellt, andererseits aber oberhalb eines vorgegebenen Temperaturgrenzwertes unbrauchbar wird. Auch temperaturabhängige Balligkeiten der Walzenschale, die bei der Regelung berücksichtigt werden müßten, werden reduziert.

Ein weiterer Vorteil liegt darin, daß dir Zahl der getrennt voneinander zu regelnden Lagerelemente reduziert werden kann. Beispielsweise kommt man statt bisher acht Zonen nunmehr mit fünf oder sechs Zonen aus. Trotzdem werden die gefürchteten M- bzw. W-Walzenschalenverformungen vermieden.

Durch die Ausgestaltung mit einer zylindrischen Radialbohrung und einem am Lagerring angebrachten Radialkolben lassen sich die Kammern auf einfache Weise abdichten. Außerdem ist der Lagerring gegen Drehung gesichert.

Mit Vorteil ist die mindestens eine Kammer absperrbar mit einer Flüssigkeitsquelle verbunden. Nach dem Absperren hat der Lagerring eine definierte Position mit Bezug auf den Träger.

Insbesondere können zwei Kammern mit sich bei der Verstellung veränderndem Volumen vorgesehen sein, die je über ein Absperrventil mit der Flüssigkeitsquelle verbunden sind. Eine solche Blockiervorrichtung vermag in der Druckbehandlungsebene positive und negative Kräfte aufzunehmen, was von Interesse ist, wenn bei einer bestimmten Arretierungsposition ein Betrieb zwischen maximaler und minimaler Streckenlast durchführbar sein soll.

Konstruktiv empfiehlt es sich, daß die Kammer durch eine zylindrische Radialbohrung im Träger und durch einen am Lagerring angebrachten Radialkolben begrenzt wird. Bei einer solchen Ausgestaltung lassen sich die Kammern auf einfache Weise abdichten. Außerdem ist der Lagerring gegen Drehung gesichert.

Günstig ist es auch, wenn die Lagerflächen von Sekundär-Lagerelementen, die auf der den Primär-Lagerelementen gegenüberliegenden Seite des Trägers angeordnet sind, kleiner sind als diejenigen der Primär-Lagerelemente. Durch diese Verkleinerung wird die Reibung nochmals herabgesetzt, weil die der Reibung ausgesetzte Fläche, nämlich der außen an die Lagertaschen anschliessende Spalt zwischen Walzenschale und Lagerfläche des Lagerelements, kleiner ist. Zwar muß zur Beibehaltung gleicher Verhältnisse der Lagertaschendruck erhöht werden. Dies ist aber bei den Sekundär-Lagerelementen ohne Schwierigkeiten möglich, weil die dort auftretenden Gegenkräfte ohnehin kleiner sind als die von den Primär-Lagerelementen zu übertragenden Lagerkräfte.

Es besteht auch die Möglichkeit, daß die Sekundär-Lagerelemente, die auf der den Primär-Lagerelementen gegenüberliegenden Seite des Trägers angeordnet sind, einen größeren axialen Abstand voneinander haben als die Primär-Lagerelemente. Auch dies führt zu einer Insgesamt-Verkleinerung der Lagerflächen und damit zu einer Verminderung der wärmeerzeugenden Reibung.

Wenn dafür gesorgt ist, daß die Deformationsregelwalze eine endständige Walze eines Walzensystems bildet, dessen andere endständige Walze ebenfalls durch eine Durchbiegungsregelwalze gebildet ist, deren Walzenschale an den Enden ortsfest gelagert oder arretiert ist, läßt sich die in jeder Durchbiegungsregelwalze auftretende Reibung nochmals verkleinern, weil man die Druckansteuerung beider Druckregelwalzen einander entsprechend anpassen kann. Es kann sich sogar um gleiche Deformationsregelwalzen handeln, was die Lagerhaltung vereinfacht.

Wenn in der Blockiervorrichtung, beispielsweise einer Kolben-Zylinder-Anordnung, Leckverluste auftreten, kann sich das Kammervolumen in unerwünschter Weise verringern, was die Arretierung beeinträchtigt. Daher empfiehlt sich eine Nachfüllvorrichtung, die anspricht, wenn sich in der Blockierstellung das Kammervolumen verringert. Alle Leckverluste werden umgehend durch die Nachfüllvorrichtung kompensiert. Das Volumen der Kammer bleibt daher konstant. Damit ist die Arretierung des Lagerringes in der gewünschten Zwischenposition gewährleistet. Leckverluste können die Blockierungsfunktion nicht stören.

Für die Ausgestaltung der Nachfüllvorrichtung gibt es vielerlei Möglichkeiten. Beispielsweise kann ein Lagefühler Abweichungen von der vorgegebenen Zwischenposition feststellen und in Abhängigkeit davon ein Nachfüllen vorgenommen werden.

Bei einer bevorzugten Ausführungsform ist dafür gesorgt, daß ein Vergleicher den von einem Druckaufnehmer ermittelten Istwert des Kammerdrucks mit einem einstellbaren Grenzwert vergleicht und daß das Absperrventil so steuerbar ist, daß es die Sperrstellung einnimmt, wenn der Istwert gleich oder größer als der Grenzwert ist, und zum Zweck des Nachfüllens in die Öffnungsstellung geht, wenn der Istwert kleiner als der Grenzwert ist. Der Genzwert entspricht in der Regel dem zu Anfang des betreffenden Arbeitsvorganges in der Kammer herrschenden Druck und kann entwerder durch Messung erfaßt oder auf andere Weise, z.B. durch Berechtung, ermittelt werden. Immer dann, wenn der Kammerdruck unter diesen Grenzwert fällt, erfolgt ein Nachfüllen. Wenn sich jedoch der Kammerdruck aufgrund äußerer Verstellkräfte erhöht, bleibt das Absperrventil geschlossen. Die Nachfüllfunktion stört daher nicht die Arretierfunktion.

Günstig ist ferner eine Betätigungsvorrichtung, die das Absperrventil bei einer Änderung der Grenzwerteinstellung öffnet. Damit ist sichergestellt, daß aus der Kammer auch Druckflüssigkeit abgelassen werden kann, wenn dies durch eine Änderung des Grenzwertes, insbesondere seine Herabsetzung, erforderlich ist.

Vorteile bietet es, daß die Druckflüssigkeitquelle eine Ausgangsvorrichtung veränderbaren Drucks aufweist, die wenigstens bei geöffnetem Absperrventil auf dem einstellbaren Grenzwert gehalten wird. Dies ergibt ein besonders einfaches Nachfüllen, weil sich beim Öffnen des Absperrventils in der Kammer sofort der ursprüngliche Druck aufbaut und damit das ursprüngliche Volumen erreicht wird.

Insbesondere kann zwischen eine Pumpe und das Absperrventil ein Druckregelventil geschaltet werden. Dieses stellt an seinem Ausgang Druckflüssigkeit mit dem gewünschten Grenzwert des Drucks zur Verfügung. Es kann mit dem Absperrventil in einem Block zusammengefaßt werden.

Besonders günstig ist es, daß das Absperrventil mit einer Ansprechverzögerungseinrichtung für den Schließ- und/oder Öffnungsvorgang versehen ist. Eine nur zeitabhängige Ansprechverzögerung stellt beispielsweise sicher, daß der Nachfüllvorgang mit Sicherheit beendet ist, bevor das Absperrventil schließt. Und wenn zusätzlich dafür gesorgt ist, daß das Absperrventil nur betätigt wird, wenn die Ansprechursache während der Ansprechverzögerungszeit bestehen blieb, wird verhindert, daß Druckschwankungen, die nicht von einem Volumenverlust herrühren, sondern durch Schwingungen im Walzensystem, z.B. wegen einer Walzenunwucht, oder andere Ursachen ausgelöst worden sind, keinen Einfluß auf das Absperrventil haben. Darüber hinaus erhält man eine Schalthysterese, die eine zu häufige Betätigung des Absperrventils vermeiden hilft. Eine solche Schalthysterese kann aber auch mit anderen bekannten Mitteln erzielt werden, beispielsweise dadurch, daß das Öffnen des Absperrventils nicht unmittelbar beim Unterschreiten des Grenzwerts, sondern bei einem etwas darunter liegenden Wert erfolgt.

In manchen Fällen ist es empfehlenswert, daß die Kammer mit einem Druckspeicher verbunden ist und daß die Leitung zwischen Kammer und Druckspeicher einen geringeren Strömungswiderstand hat als die Leitung zwischen Kammer und Druckaufnehmer. Hiermit kann sichergestellt werden, daß von außen aufgebrachte Druckschwankungen, wie sie vorstehend erwähnt worden sind, sich am Druckaufnehmer nicht bemerkbar machen und daher auch nicht das Absperrventil auslösen können.

Andererseits darf aber der Druckspeicher die Blockierfunktion nicht beeinträchtigen. Er muß daher sehr klein gehalten werden. Daher sollte er ein Volumen von höchstens 500 cm$^3$ und vorzugsweise 200 cm$^3$ oder weniger haben.

Eine besonders sichere Blockierung ergibt sich, wenn zwei in der Wirkebene einander gegenüberliegende Kammern mit sich bei der Verstellung gegensinnig veränderndem Volumen vorgesehen sind, die je über ein Absperrventil mit der Druckflüssigkeitsquelle verbunden sind. Hierbei empfiehlt es sich, daß beide Kammern je mit einer Nachfüllvorrichtung versehen und für beide Kammern unterschiedliche Grenzwerte einstellbar sind. Es handelt sich daher um zwei eigenständige Systeme, die den Arbeitsbedingungen entsprechend eingestellt werden können.

Die Erfindung wird nachstehend anhand in der Zeichnung dargestellter bevorzugter Ausführungsbeispiele näher erläutert. Es zeigen:

Fig. 1 einen Teillängsschnitt durch eine erste Ausführungsform der Erfindung,

Fig. 2 einen Schnitt längs der Linie A-A der Fig. 1,

Fig. 3 einen Schnitt längs der Linie B-B einer abgewandelten Ausführungsform nach Fig. 4,

Fig. 4 einen Teillängsschnitt durch die abgewandelte Ausführungsform,

Fig. 5 einen Teillängsschnitt durch ein weiteres Ausführungsbeispiel,

Fig. 6 schematisch ein Walzensystem mit der erfindungsgemäßen Deformationsregelwalze,

Fig. 7 schematisch ein anderes Walzensystem mit zwei Deformationsregelwalzen und

Fig. 8 eine Abwandlung mit Nachfüllvorrichtung.

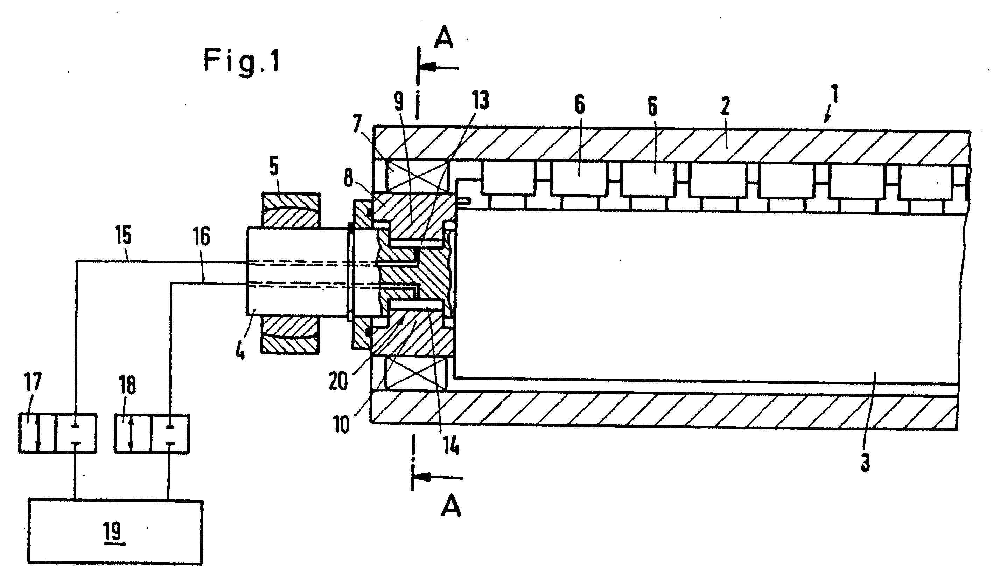

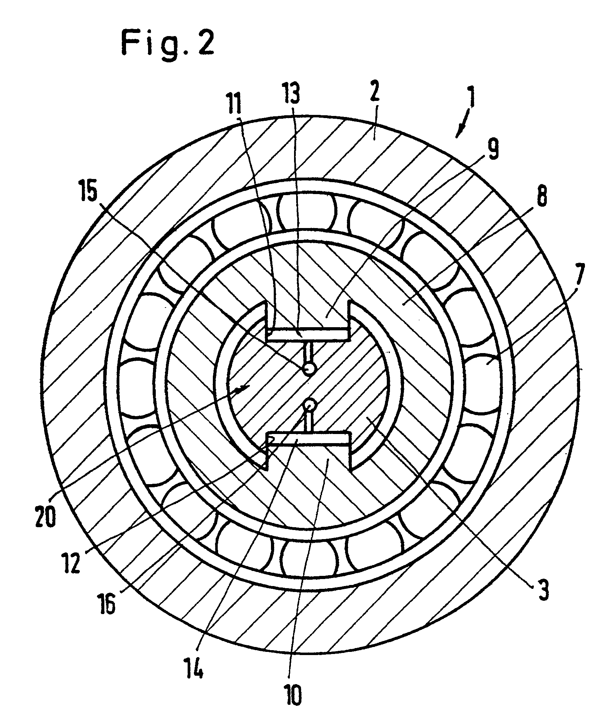

Die in den Figuren 1 und 2 veranschaulichte Deformationsregelwalze 1 weist eine Walzenschale 2 auf, die von einem Träger 3 durchsetzt ist. Dieser ist mit seinen Enden 4 jeweils drehfest in einem Kalottenlager 5 gehalten. Die Walzenschale 2 wird durch in der Druckbehandlungsebene wirkende Primär-Lagerelemente 6 auf dem Träger 3 abgestützt. Beispielsweise werden die ersten beiden Primär-Lagerelemente 6 von einem gemeinsamen Druckeinstellorgan mit demselben Druck versorgt und bilden eine erste Zone, die nächsten drei Primär-Lagerelemente 6 eine zweite Zone und so fort. Die Enden der Walzenschale sind über ein Wälzlager 7 auf einem drehfesten Lagerring 8 gehalten. Er ist in der Druckbehandlungsebene radial vertagerbar.

Wie Fig. 2 zeigt, greifen zwei Kolben 9 und 10, die mit dem Lagerring 8 fest verbunden sind, in entsprechende Zylinderbohrungen 11 bzw. 12 des Trägers 3. Hierdurch entstehen zwei Kammern 13 und 14, die durch nicht veranschaulichte Dichtungen abgeschlossen sind. Die Kammern 13 und 14 sind über Kanäle 15 und 16 sowie je ein Absperrventil 17 bzw. 18 mit einer Flüssigkeitsquelle 19 verbunden und bilden eine Blockiervorrichtung 20, die es erlaubt, den Lagerring 8 in jeder Zwischenstellung seines radialen Verstellweges zu arretieren. Wenn eine Verschiebung des Lagerrings 8 bei geöffneten Absperrventilen 17 und 18 allein durch die Wirkung der Lagerelemente 6 erfolgt, genügt eine Flüssigkeitsquelle sehr geringen Drucks; er muß nur ausreichen, die Kammern 13 und 14 jeweils gefüllt zu halten. Man kann aber auch eine Flüssigkeitsquelle höheren Drucks verwenden, die in der Lage ist, den Lagerring 8 zusammen mit dem Ende der Walzenschale 2 unter Überwindung von äußeren Gegenkräften anzuheben. Ist die richtige Position erreicht, werden die Absperrventile 17 und 18 geschlossen. Dies ergibt eine Fixierung der Achse der Walzenschale 2 an beiden Enden, wie sie sonst nur bei einer festen Lagerung erfolgt.

Die einheitliche Schraffur von Lagerring 8 und Kolben 9, 10 in den Figuren 1 und 2 soll andeuten, daß diese Teile mechanisch fest miteinander verbunden sind. In der Praxis werden die Kolben 9, 10 getrennt vom Lagerring gefertigt. Zur Montage werden sie in die Zylinder 13, 14 gelegt, worauf der Lagerring 8 axial darüber geschoben wird. Dann werden die Teile durch mehrere zur Kolbenachse parallele Schrauben miteinander verbunden. Die Berührungsfläche ist vorzugsweise eben und kann durch den Grund einer Axialnut am Innenumfang des Lagerringes gebildet sein. Eine Drehung des Kolbens vor dem Festschrauben wird verhindert, wenn er außerhalb des Zylinders Rücksprünge mit zueinander parallelen Führungsflächen aufweist, die an den Seitenwänden der Axialnuten anliegen.

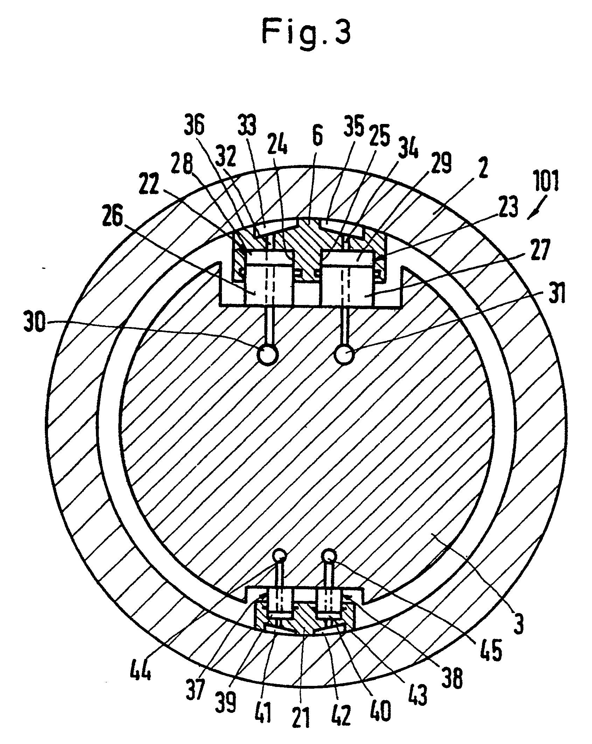

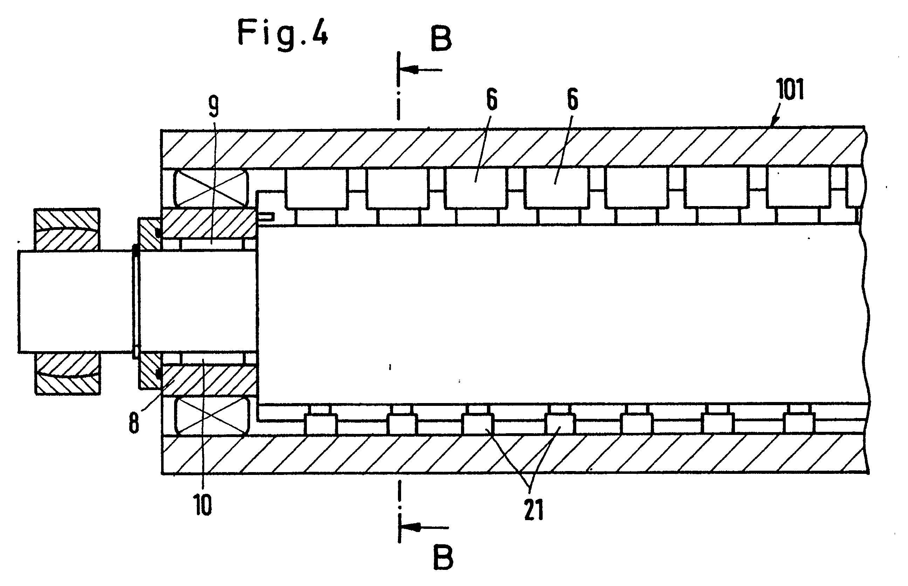

Die Figuren 3 und 4 zeigen eine den Figuren 1 und 2 sehr ähnliche Deformationsregelwalze 101. Es werden daher für identische Teile auch die selben Bezugszeichen wie in den Figuren 1 und 2 verwendet. Unterschiedlich ist im wesentlichen nur, daß zusätzlich zu den Primär-Lagerelementen 6 auf der gegenüberliegenden Seite Sekundär-Lagerelemente 21 vorgesehen sind, welche es erlauben, eine gewisse Spannkraft auf die Walzenschale 2 auszuüben, was eine hohe Querkraft-Stabilisierung erlaubt.

Das Primär-Lägerelement 6 der Fig. 3 ist mit zwei Druckgebern 22 und 23 versehen, die in Umfangsrichtung gegeneinander versetzt sind. Zur Bildung der Druckgeber weist das Primär-Lagerelement 6 zwei zylindrische Bohrungen 24 und 25 auf, in welche am Träger 3 befestigte Kolben 26 und 27 eingreifen. Dem so gebildeten Druckraum 28 bzw. 29 wird zonenweise Druckflüssigkeit von einer Leitung 30 bzw. 31 zugeführt. Der Druckraum 28 ist über eine Drossel 32 mit einer Lagertasche 33 und der Druckraum 29 über eine Drossel 34 mit einer Lagertasche 35 in der Lagerfläche 36 des Primär-Lagerelements 6 verbunden. Wird über die Leitungen 30, 31 Druckflüssigkeit mit einem änderbaren Druck zugeführt, ergibt sich eine Belastung des Primär-Lagerelements 6 in den beiden Druckräumen 28 und 29 sowie eine hydrostatische Lagerung im Bereich der Lagertaschen 33 und 35. Die Druckflüssigkeit strömt dann von den Lagertaschen nach außen durch einen zwischen der Lägerfläche 36 und der Innenfläche der Walzenschale 2 gebildeten Spalt.

Das Sekundär-Lagerelement 21 hat einen ähnlichen Aufbau mit zwei in Umfangsrichtung versetzten Druckgebern 37 und 38, deren Druckräume 39, 40 über Drosseln mit Lagertaschen 41 und 42 in der Lagerfläche 43 des Sekundär-Lagerelements 21 verbunden sind. Druckflüssigkeit mit änderbarem Druck wird über Leitungen 44 und 45 zugeführt.

Die Lagerfläche 43 des Sekundär-Lagerelements 21 ist erheblich kleiner als die Lagerfläche 36 des Primär-Lagerelements 6. Das gleiche gilt für dit Querschnittsflächen der Druckräume 39 und 40 im Vergleich zu den Druckräumen 28 und 29. Obwohl zur Aufrechterhaltung gleicher Verhältnisse in Folge dieser Verkleinerung des Sekundär-Lagerelements 21 der zugefürte Druck höher sein muß, ist die Reibung in dem Spalt zwischen der Walzenschale 2 und dem außerhalb der Lagertaschen 41 und 42 liegenden Rand der Lagerfläche 43 vermindert, so daß eine geringere Antriebsleistung aufzubringen ist und eine geringere Reibungserwärmung auftritt.

Als Lagerfläche 36 bzw. 43 wird die gesamte der Walzenschale 2 gegenüberstehende Fläche der Lagerelemente 6 und 21 bezeichnet, die sich aus den Lagertaschen und den diese umgebenden Stegen zusammensetzt. Die Verminderung der Reibung beruht im wesentlichen darauf, daß bei einer Verkleinerung der Lagerfläche auch die Umfangslänge und damit die wirksame Fläche der Randstege verkleinert wird.

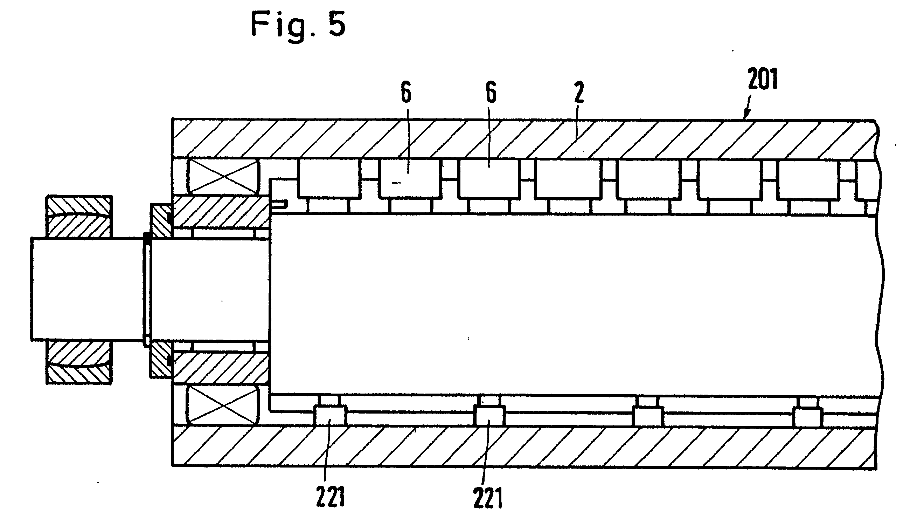

Bei der Ausführungsform nach Fig. 5 ist die Deformationsregelwalze 201 in gleicher Weise aufgebaut wie die zuvor beschriebenen Deformationsregelwalzen. Für gleiche Teile werden daher auch die gleichen Bezugszeichen verwendet. Unterschiedlich ist lediglich, daß die Sekundär-Lagerelemente 221 einen größeren axialen Abstand voneinander haben als die Primär-Lagerelemente 6.

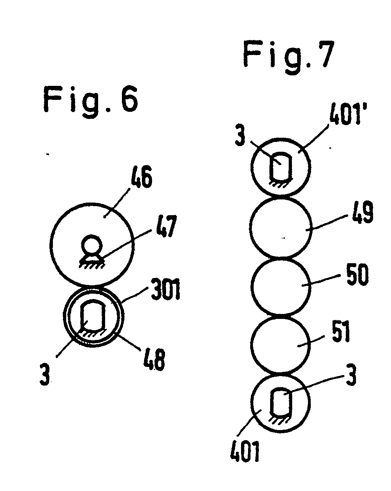

In Fig. 6 ist ein Walzensystem veranschaulicht, das aus einer Basiswalze 46 mit festem Lager 47 und einer Deformationsregelwalze 301 besteht, die außen an der Walzenschale einen elastischen Bezug 48 aus Papier oder Kunststoff aufweist. Wenn die Basiswalze 46 eine Deformationsregelwalze mit ähnlichem Aufbau wie die Deformationsregelwalze 301 ist, so ergibt sich das feste Lager 47 dadurch, daß die Lagerringe 8 durch die Blockiervorrichtung 20 in einer festen Zwischenposition arretiert oder durch Füllung der oberen Zylinder 13 in der durch mechanische Anlage gebildeten unteren Endposition gehalten werden.

Bei der Ausführungsform nach Fig. 7 ist ein Superkalander mit mehreren übereinander angeordneten Walzen vorgesehen. Die unterste Walze ist eine Deformationsregelwalze 401. Die oberste Walze ist eine Deformationsregelwalze 401'. Dazwischen befinden sich übliche Kalanderwalzen 49, 50 und 51, von denen beispielsweise jede zweite mit einem elastischen Bezug versehen sein kann. Die beiden Deformationsregelwalzen 401 und 401' können einander gleich sein. Auch hier werden die Enden der Walzenmäntel durch Arretierung der Lagerringe in gewählten Zwischen- bzw. Endpositionen fest gelagert.

In den Figuren 6 und 7 sind die Träger 3 bzw. das Lager 47 ortsfest dargestellt, wie es der Betriebsstellung entspricht. Es versteht sich aber, daß diese Lagerung in üblicher Weise eine Schnellabsenkung bzw. eine Anpassung an unterschiedliche Walzendurchmesser zuläßt. Die Träger 3 sind derart eingebaut, daß die Primär-Lagerelemente 6 dem benachbarten Walzenspalt zugewandt und die Sekundär-Lagerelemente 21 diesem Walzenspalt abgewandt sind. Zur Behandlung eines Bahnmaterials im Walzenspalt ist eine bestimmte Größe und Verteilung der Streckenlast und eine bestimmte Form des Walzenspalts erforderlich. Diese Bedingungen werden durch die Positionierung des Lagerringes 8 mit Bezug auf den Träger 3 sowie durch eine entsprechende zonenweise Druckansteuerung der Primär-Lagerelemente 6 und der Sekundär-Lagerelemente 21 bewirkt. Es gibt jeweils eine Position des Lagerringes 8, bei der die Summe aller durch die Lagerelemente 6 und 21 aufzubringenden Kräfte ein Minimum ist. Dies kann durch Versuche ermittelt werden. Moderne Walzensysteme besitzen einen Rechner, der die entsprechenden Werte vorgibt.

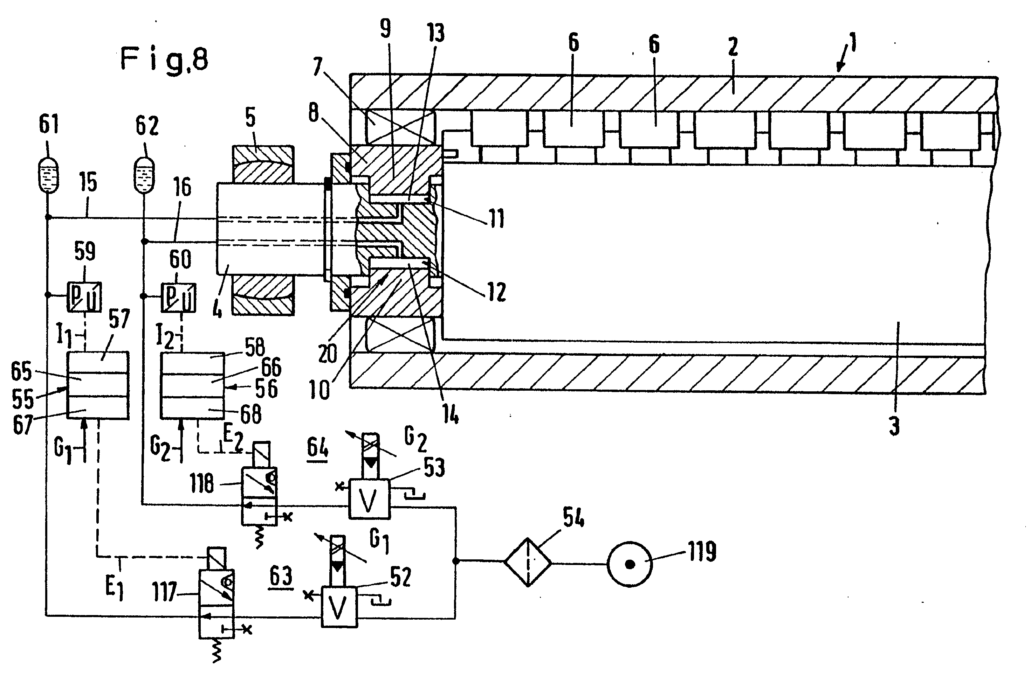

Die in Fig. 8 dargestellte Deformationsregelwalze 1 entspricht der Fig. 1; lediglich die Ventilanordnung ist geändert. Die Kammern 13 und 14 sind über Leitungen 15 und 16, die in Reihenschaltung je ein Absperrventil 117 und ein Druckregelventil 52 bzw. ein Absperrventil 118 und ein Druckregelventil 53 aufweisen, mit einer mit Filter 54 versehenen Druckflüssigkeitsquelle 119 (Pumpe) verbunden. Die Kammern bilden eine Blockiervorrichtung 20, die es erlaubt, den Lagerring 8 in jeder Zwischenstellung seines radialen Verstellweges zu arretieren. Zu diesem Zweck werden die beiden Kammern 13 und 14 mit einer der gewünschten Zwischenstellung entsprechenden Flüssigkeitsmenge über die Leitungen 15 und 16 gefüllt, worauf die Absperrventile 117, 118 geschlossen werden.

Jeder der beiden Kammern 13 und 14 ist eine elektrische Steuerschaltung 55 bzw. 56 zugeordnet, die u.a. einen Vergleicher 57 bzw. 58 enthält. Je ein Druckaufnehmer 59 bzw. 60 gibt eine dem Leitungsdruck p entsprechende Spannung U als Istwert $I_1$ bzw. $I_2$ an den Vergleicher ab. Außerdem wird der Steuerschaltung als elektrisches Signal ein Druck-Grenzwert $G_1$ bzw. $G_2$ zugeführt. Die Einstellung kann von Hand, von einem Rechenkreis, mittels eines Prozessors oder auf andere Weise erfolgen. Erreicht der Istwert I den Grenzwert G oder ist er größer als dieser, so gibt die Steuerschaltung 55 bzw. 56 ein Erregersignal $E_1$ bzw. $E_2$ an den Elektromagneten des Absperrventils 117 bzw. 118 ab. Dieses geht in seine Sperrstellung. Fällt der Istwert I unter den Grenzwert G, öffnet das Absperrventil. In diesem Ausführungsbeispiel sind die Absperrventile als Sitzventile ausgeführt.

Der Grenzwert $G_1$ bzw. $G_2$ wird auch an den Regelventilen 52 bzw. 53 eingestellt. Es handelt sich um Ventile mit magnetisch betätigter Vorsteuerung und innerer Rückführung, die an ihrem Ausgang einen dem eingestellten Grenzwert entsprechenden Druck zur Verfügung halten. Es kann ein gemeinsames Grenzwert-Signal jeweils für die Steuerschaltung 55 und das Druckregelventil 52 bzw. für die Steuerschaltung 56 und das Druckregelventil 53 verwendet werden. Der Erregerstrom für die Druckregelventile kann auch von der Steuerschaltung her zugeführt werden.

An die Leitungen 15 und 16 ist je ein kleiner Druckspeicher 61 bzw. 62 angeschlossen. Er hat eine Größe von 200 cm³ oder weniger. Der Abschnitt der Leitung zwischen Kammer 13 und Druckspeicher 61 hat einen geringeren Strömungswiderstand als der Abschnitt zwischen Kammer 13 und Druckaufnehmer 59. Das gleiche gilt für die Abschnitte der Leitung 16. Druckschwingungen werden daher vom Druckspeicher aufgenommen und derart reduziert, daß sie auf den Druckaufnehmer nur noch wenig Einfluß haben.

Die aus dem Absperrventil 117 und dem Druckregelventil 52 bestehende Ventilanordnung bildet eine Nachfüllvorrichtung 63, die aus dem Absperrventil 118 und dem Druckregelventil 53 gebildete Ventilanordnung eine Nachfüllvorrichtung 64. Die Nachfüllvorrichtungen dienen dazu, Leckverluste der Kammern 13 und 14 im Betrieb auszugleichen.

Die Steuerschaltungen 55 und 56 weisen auch je eine Ansprechverzögerungseinrichtung 65 bzw. 66 für die Absperrventile 117 und 118 auf, mit denen der Schließ- und/oder Öffnungsvorgang verzögert werden kann. Außerdem sind in der Steuerschaltung 55 und 56 Betätigungsvorrichtungen 67 bzw. 68 enthalten, die das Absperrventil 117 bzw. - 118 durch Unterbrechung des Erregersignals $E_1$ bzw. $E_2$ bei einer Änderung der Grenzwerteinstellung öffnen. Auf diese Weise kann auch Kammervolumen abgebaut werden.

Zu Beginn des Betriebes werden die Kammern 13 und 14 mit einer bestimmten Flüssigkeitsmenge gefüllt, so daß der Lagerring 8 die gewünschte Zwischenposition einnimmt. Dann werden die Absperrventile 117 und 118 geschlossen. Sobald die Walze in Betrieb genommen ist, herrscht in den Kammern ein vorgegebener Betriebsdruck. Dieser Betriebsdruck wird als Grenzwert $G_1$ und $G_2$ den Steuerschaltungen 55 bzw. 56 und den Druckregelventilen 52 bzw. 53 zugeleitet. Wenn äußere Kräfte den Lagerring 8 verschieben wollen, gelingt dies nicht, weil die in den Kammern eingesperrten Volumina dies verhindern. Der Lagerring ist also einwandfrei arretiert. Sobald Leckverluste auftreten, bei denen der Kammerdruck sinkt, öffnet das zugehörige Absperrventil 117 bzw. 118, weil der Istwert I des Drucks unter den Grenzwert G gefallen ist. Es erfolgt eine automatische Nachfüllung über das zugehörige Druckregelventil 52 bzw. 53, das an seinem Ausgang einen dem Grenzdruck entsprechenden Druck zur Verfügung hält. Auf diese Weise wird das Kammervolumen wieder aufgefüllt. Sobald der Istwert den Grenzwert erreicht und überschritten hat, wird das Absperrventil wieder geschlossen.

Um den bei Betriebsbeginn vorhandenen Kammerdruck festzustellen, können die Druckaufnehmer 59 und 60 verwendet werden, so daß die Grenzwerte automatisch eingeführt werden. Man kann die Grenzwerte aber auch berechnen oder auf andere Weise vorgeben.

Das Füllen der Kammern kann erfolgen, solange die Lagerelemente 6 noch nicht belastet sind. In diesem Fall genügen verhältnismäßig geringe Drücke, um eine Positionsänderung des Lagerringes 8 zu bewirken. Man kann aber auch die Kammern 13 und 14 gleichzeitig mit der Inbetriebnahme der Lagerelemente 6 oder danach füllen. In diesem Fall muß mit einem höheren Druck gearbeitet werden, der durch die Druckregelventile 52 und 53 vorgegeben werden kann. In diesem Fall kann der dem Grenzwert $G_1$ bzw. $G_2$ entsprechende Druck unmittelbar als Fülldruck verwendet werden.

Die Blockiervorrichtung 20 kann auch einen anderen Aufbau haben. Hydraulische Blockiervorrichtungen sind gegenüber mechanischen Blockiervorrichtungen zu bevorzugen, weil sie auf einfachere Weise verstellbar sind. Statt der veranschaulichten Kammern kommen auch Balgdosen, Wellrohrelemente u.dgl. in Betracht.

## Patentansprüche

1. Deformationsregelwalze für ein Walzensystem mit mindestens zwei einen Walzenspalt zwischen sich bildenden Walzen, bei der eine Walzenschale (2) mit Hilfe von hydrostatischen Lagerelementen (6, 2; 221), die durch Druckgeber (22, 23; 37, 38) belastet sind, auf einem die Walzenschale (2) durchsetzenden, drehfest gehaltenen Träger (3) abgestützt und radial relativ zum Träger verstellbar ist, wobei zumindest auf der Walzenspalt-Seite vorgesehene Lagerelemente (Primär-Lagerelemente 6) zonenweise unterschiedlich mit Druck versorgbar sind, wobei die Enden der Walzenschale (2) je auf einem Lagerring (8) gelagert sind, der radial zum Träger (3) verstellbar ist, und wobei mindestens eine Kammer (13, 14) mit bei der Verstellung veränderlichem Volumen vorgesehen ist, die durch eine zylindrische Radialbohrung (11, 12) im Träger (3) und einen auf den Lagerring (8) wirkenden Radialkolben (9, 10) begrenzt wird, dadurch gekennzeichnet, daß die Kammer (13, 14) Teil einer Blockiervorrichtung (20) ist, mit der der Lagerring (8) zur Beeinflussung der Größe und Verteilung der Streckenlast sowie der Form der Walzenschale (2) und damit des Walzenspalts in beliebig wählbaren Zwischenpositionen des Verstellweges arretierbar ist, und daß der Radialkolben (9, 10) am Lagerring (8) angebracht ist.

2. Deformationsregelwalze nach Anspruch 1, dadurch gekennzeichnet, daß die mindestens eine Kammer über ein Absperrventil (17, 18) mit einer Flüssigkeitsquelle (19) verbunden ist.

3. Deformationsregelwalze nach Anspruch 1 oder 2, dadurch gekennzeichnet, daß zwei Kammern (13, 14) mit sich bei der Verstellung gegensinnig veränderndem Volumen vorgesehen sind, die je über ein Absperrventil (17, 18) mit der Flüssigkeitsquelle (19) verbunden sind.

4. Deformationsregelwalze nach einem der Ansprüche 1 bis 3, dadurch gekennzeichnet, daß die Lagerflächen (43) von Sekundär-Lagerelementen (21), die auf der den Primär-Lagerelementen (6) gegenüberliegenden Seite des Trägers (3) angeordnet sind, kleiner sind als diejenigen (36) der Primär-Lagerelemente (6).

5. Deformationsregelwalze nach einem der Ansprüche 1 bis 4, dadurch gekennzeichnet, daß die Sekundär-Lagerelemente (21), die auf der den Primär-Lagerelementen (6) gegenüberliegenden Seite des Trägers (3) angeordnet sind, einen größeren axialen Abstand voneinander haben als die Primär-Lagerelemente (6).

6. Deformationsregelwalze nach einem der Ansprüche 1 bis 5, dadurch gekennzeichnet, daß sie die eine endständige Walze (401) eines Walzensystems bildet, dessen andere endständige Walze (401') ebenfalls durch eine Durchbiegungsregelwalze gebildet ist, deren Walzenschale an den Enden ortsfest gelagert oder arretiert ist.

7. Deformationsregelwalze nach einem der Ansprüche 1 bis 6, gekennzeichnet durch eine Nachfüllvorrichtung (63, 64), die anspricht, wenn sich in der Blockierstellung das Kammervolumen verringert.

8. Deformationsregelwalze nach einem der Ansprüche 1 bis 7, dadurch gekennzeichnet, daß ein Vergleicher (57, 58) den von einem Druckaufnehmer (59, 60) ermittelten Istwert ($I_1$, $I_2$) des Kammerdrucks mit einem einstellbaren Grenzwert ($G_1$, $G_2$) vergleicht und daß das Absperrventil (117, 118) so steuerbar ist, daß es die Sperrstellung einnimmt, wenn der Istwert gleich oder größer als der Grenzwert ist, und zum Zweck des Nachfüllens in die Öffnungsstellung geht, wenn der Istwert kleiner als der Grenzwert ist.

9. Deformationsregelwalze nach einem der Ansprüche 1 bis 8, gekennzeichnet durch eine Betätigungsvorrichtung (67, 68), die das Absperrventil (117, 118) bei einer Änderung der Grenzwerteinstellung öffnet.

10. Deformationsregelwalze nach einem der Ansprüche 1 bis 9, dadurch gekennzeichnet, daß die Druckflüssigkeitsquelle (119) eine Ausgangsvorrichtung (52, 53) veränderbaren Drucks aufweist, der wenigstens bei geöffnetem Absperrventil (117, 118) auf dem einstellbaren Grenzwert ($G_1$, $G_2$) gehalten wird.

11. Deformationsregelwalze nach Anspruch 10, dadurch gekennzeichnet, daß zwischen eine Pumpe (119) und das Absperrventil (117, 118) ein Druckregelventil (52, 53) geschaltet ist.

12. Deformationsregelwalze nach einem der Ansprüche 1 bis 11, dadurch gekennzeichnet, daß das Absperrventil (117, 118) mit einer Ansprechverzögerungseinrichtung (65, 66) für den Schließ- und /oder Öffnungsvorgang versehen ist.

13. Deformationsregelwalze nach einem der Ansprüche 1 bis 12, dadurch gekennzeichnet, daß die Kammer (13, 14) mit einem Druckspeicher (61, 62) der ein Volumen von höchstens 500 cm³ und vorzugsweise 200 cm³ oder weniger hat, verbunden ist und daß die Leitung zwischen Kammer und Druckspeicher einen geringeren Strömungswiderstand hat als die Leitung zwischen Kammer und Druckaufnehmer (59, 60).

14. Deformationsregelwalze nach einem des Ansprüche 1 bis 13, bei der zwei in der Wirkebene einander gegenüberliegende Kammern mit sich bei der Verstellung gegensinnig veränderndem Volumen vorgesehen sind, die je über ein Absperrventil mit der Druckflüssigkeitsquelle verbunden sind, dadurch gekennzeichnet, daß beide Kammern je mit einer Nachfüllvorrichtung (63, 64) versehen und für beide Kammern (13, 14) unterschiedlicbe Grenzwerte (G₁, G₂) einstellbar sind.

## Claims

1. Controlled-deformation roll for a roll system with two or more rolls forming a nip between them, in which a roll shell (2) is supported by means of hydrostatic bearing elements (6, 2; 221) which are loaded by pressure transducers (22, 23; 37, 38) on a non-rotatably retained support (3) passing through the roll shell (2) and is radially displaceable relative to the support, wherein bearing elements provided at least on the nip side (primary bearing elements 6) can be supplied with pressure differently in zones, wherein the ends of the roll shell (2) are each mounted on a bearing ring (8) which is radially displaceable relative to the support (3), and wherein at least one chamber (13, 14) with a volume variable during displacement is provided, which is defined by a cylindrical radial bore (11, 12) in the support (3) and a radial piston (9, 10) acting on the bearing ring (8), characterised in that the chamber (13, 14) forms part of a blocking device (20) with which the bearing ring (8) can be locked to control the quantity and distribution of roll train load as well as the shape of the roll shell (2) and hence the nip in any selected intermediate positions of the path of displacement, and that the radial piston (9, 10) is mounted on the bearing ring (8).

2. Controlled-deformation roll according to claim 1, characterised in that the chamber, of which there is at least one, is connected to a fluid source (19) by a shut-off valve (17, 18).

3. Controlled-deformation roll according to claim 1 or 2, characterised in that two chambers (13, 14) with a volume varying in opposite directions during displacement are provided, which are each connected by a shut-off valve (17, 18) to the fluid source (19).

4. Controlled-deformation roll according to any of claims 1 to 3, characterised in that the bearing surfaces (43) of secondary bearing elements (21), which are arranged on the side of the support (3) opposite the primary bearing elements (6), are smaller than those (36) of the primary bearing elements (6).

5. Controlled-deformation roll according to any of claims 1 to 4, characterised in that the secondary bearing elements (21), which are arranged on the side of the support (3) opposite the primary bearing elements (6), are spaced apart from each other by a greater axial distance than the primary bearing elements (6).

6. Controlled-deformation roll according to any of claims 1 to 5, characterised in that it forms one terminal roll (401) of a roll system of which the other terminal roll (401') is also formed by a controlled-deflection roll of which the roll shell is mounted stationarily at the ends or locked.

7. Controlled-deformation roll according to any of claims 1 to 6, characterised by a top-up device (63, 64) which responds if the chamber volume decreases in the blocking position.

8. Controlled-deformation roll according to any of claims 1 to 7, characterised in that a comparator (57, 58) compares the actual value (I₁, I₂) of chamber pressure, which is determined by a pressure sensor (59, 60), with an adjustable limit value (G₁, G₂), and that the shut-off valve (117, 118) is controllable in such a way that it adopts the shut-off position when the actual value is equal to or greater than the limit value, and for the purpose of topping up moves into the open position when the actual value is smaller than the limit value.

9. Controlled-deformation roll according to any of claims 1 to 8, characterised by an actuating device (67, 68) which opens the shut-off valve (117, 118) in case of a change in the limit value setting.

10. Controlled-deformation roll according to any of claims 1 to 9, characterised in that the pressurised fluid source (119) comprises a variable-pressure output device (52, 53) which is kept at the adjustable limit value (G₁, G₂) at least when the shut-off valve (117, 118) is open.

11. Controlled-deformation roll according to claim 10, characterised in that a pressure regulating valve (52, 53) is connected between a pump (119) and the shut-off valve (117, 118).

12. Controlled-deformation roll according to any of claims 1 to 11, characterised in that the shut-off valve (117, 118) is provided with a response delay device (65, 66) for the closing and/or opening process.

13. Controlled-deformation roll according to any of claims 1 to 12, characterised in that the chamber (13, 14) is connected to an accumulator (61, 62) which has a volume of not more than 500 cm³ and preferably 200 cm³ or less and that the pipe between chamber and accumulator has a lower flow resistance than the pipe between chamber and pressure sensor (59, 60).

14. Controlled-deformation roll according to any of claims 1 to 13, in which two chambers opposite each other in the working plane with a volume varying in opposite directions during displacement are provided, which are each connected by a shut-off valve to the pressurised fluid source, characterised in that the two chambers are each provided with a top-up device (63, 64) and different limit values ($G_1$, $G_2$) can be set for the two chambers (13, 14).

## Revendications

1. Cylindre à déformation réglable pour un système à cylindres comportant au moins deux cylindres définissant entre-eux une emprise, cylindre dans lequel une enveloppe de cylindre (2) s'appuie, à l'aide d'éléments de palier hydrostatiques (6, 2; 221) chargés par des générateurs de pression (22, 23; 37, 38), sur un support (3) maintenu fixe en rotation et traversant l'enveloppe de cylindre (2) qui est réglable en direction radiale par rapport au support, au moins des éléments de palier prévus sur le côté de l'emprise (éléments de palier primaires 6) pouvant être alimentes en pressions différentes par zones, les extrémités de l'enveloppe de cylindre (2) étant montées chacune sur un anneau de palier (8) qui est susceptible d'être déplacé radialement par rapport au support (3), et au moins une chambre (13, 14) à volume variable lors du déplacement de réglage étant prévue, la chambre étant délimitée par un alésage cylindrique radial (11, 12) dans le support (3) et par un piston radial (9, 10) agissant sur l'anneau de palier (8), caractérisé en ce que la chambre (13, 14) fait partie d'un dispositif de blocage (20) à l'aide duquel l'anneau de palier (8) peut être bloqué dans des positions intermédiaires de la course de déplacement de réglage pouvant être choisies à volonté, en vue d'influencer la grandeur et la répartition de la charge linéaire ainsi que la forme de l'enveloppe de cylindre (2) et de par là celle de l'emprise, et en ce que le piston radial (9, 10) est réalisé sur l'anneau de palier (8).

2. Cylindre à déformation réglable selon la revendication 1, caractérisé en ce que ladite au moins une chambre est reliée à une source de fluide (19) par l'intermédiaire d'une vanne d'arrêt (17, 18).

3. Cylindre à déformation réglable selon la revendication 1 ou 2, caractérisé en ce que sont prévues deux chambres (13, 14) dont les volumes varient de manière inverse lors du déplacement de réglage et qui sont reliées chacune par l'intermédiaire d'une vanne d'arrêt (17, 18) à la source de fluide (19).

4. Cylindre à déformation réglable selon l'une des revendications 1 à 3, caractérisé en ce que les surfaces d'appui (43) d'éléments de palier secondaires (21) qui sont disposés sur le côté du support (3) opposé à celui où se trouvent les éléments de palier primaires (6), sont plus petites que celles (36) des éléments de palier primaires (6).

5. Cylindre à déformation réglable selon l'une des revendications 1 à 4, caractérisé en ce que les éléments de palier secondaires (21) qui sont disposés sur le côté du support (3) opposé à celui où se trouvent les éléments de palier primaires, présentent un espacement réciproque supérieur à celui des éléments de palier primaires (6).

6. Cylindre à déformation réglable selon l'une des revendications 1 à 5, caractérisé en ce qu'il constitue l'un des cylindres extrêmes (401) d'un système de cylindres, dont l'autre cylindre extrême (401') est également constitué par un cylindre à flexion réglable dont l'enveloppe de cylindre est montée ou bloquée en position fixe aux extrémités.

7. Cylindre à déformation réglable selon l'une des revendications 1 à 6, caractérisé par un dispositif de compensation de remplissage (63, 64) qui se déclenche lorsqu'en position de blocage, le volume de chambre diminue.

8. Cylindre à déformation réglable selon l'une des revendications 1 à 7, caractérisé en ce qu'un comparateur (57, 58) compare la valeur réelle ($I_1$, $I_2$) déterminée par un capteur de pression (59, 60) à une valeur limite ($G_1$, $G_2$) réglable, et en ce que la vanne d'arrêt (117, 118) peut être commandée de manière à ce qu'elle prenne sa position d'isolement lorsque la valeur réelle est égale ou supérieure à la valeur limite, et qu'elle passe en position d'ouverture en vue de compenser le remplissage, lorsque la valeur réelle est inférieure à la valeur limite.

9. Cylindre à déformation réglable selon l'une des revendications 1 à 8, caractérisé par un dispositif d'actionnement (67, 68) qui ouvre la vanne d'arrêt (117, 118) lors d'une modification du réglage de la valeur limite.

10. Cylindre à déformation réglable selon l'une des revendications 1 à 9, caractérisé en ce que la source de fluide sous pression (119) comporte un dispositif de sortie (52, 53) à pression qui peut être modifiée et qui est maintenue à la valeur limite réglable ($G_1$, $G_2$) au moins pendant que la vanne d'arrêt (117, 118) est ouverte.

11. Cylindre à déformation réglable selon la revendication 10, caractérisé en ce qu'un régulateur de pression (52, 53) est monté entre une pompe (119) et la vanne d'arrêt (117, 118).

12. Cylindre à déformation réglable selon l'une des revendications 1 à 11, caractérisé en ce que la vanne d'arrêt (117, 118) est pourvue d'un dispositif de temporisation au déclenchement (65, 66) pour la phase de fermeture et/ou d'ouverture.

13. Cylindre à déformation réglable selon l'une des revendications 1 à 12, caractérisé en ce que la chambre (13, 14) est reliée à un accumulateur de pression (61, 62), qui a un volume d'au plus 500 cm³ et de préférence 200 cm³ ou moins, et en ce que la conduite entre la chambre et l'accumulateur de pression présente une résistance à l'écoulement moindre que la conduite entre la chambre et le capteur de pression (59, 60).

14. Cylindre à déformation réglable selon l'une des revendications 1 à 13, dans lequel sont prévues deux chambres opposées dans le plan d'action, dont les volumes varient de manière inverse lors du déplacement de réglage et qui sont reliées chacune par l'intermédiaire d'une vanne d'arrêt à la source de fluide sous pression, caractérisé en ce que chacune des chambres est pourvue d'un dispositif de compensation de remplissage (63, 64) et en ce qu'il est possible de régler des valeurs limites ($G_1$, $G_2$) différentes pour chacune des chambres (13, 14).

Fig.1

Fig. 2

# Fig.3

Fig.4

Fig. 5

EP 0 242 659 B1

# Fig.7

# Fig.6

Fig.8